# EUROPEAN PATENT SPECIFICATION

(11) **EP 2 168 423 B1**
(45) Date of publication and mention of the grant of the patent: **31.08.2011**
(21) Application number: 09380152.0
(22) Date of filing: 24.09.2009
(51) Int. Cl.: A01D 46/26

(54) **Modular equipment for fruit harvesting and fruit harvesting procedure using said modular equipment**
Modulare Einrichtung zur Obsternte und Obsternteverfahren unter Verwendung der modularen Einrichtung
Équipement modulaire pour la récolte de fruits et procédé de récolte de fruits utilisant ledit équipement modulaire

(30) Priority: 24.09.2008 ES 200802705; 09.03.2009 ES 200900653
(43) Date of publication of application: 31.03.2010
(73) Proprietor: Moleo Tecnologias, S.L., 41007 Sevilla (ES)
(72) Inventor: De Lara Cruz, Antonio, 41007 Sevilla (ES); De Lara Cruz, Sebastian, 41007 Sevilla (ES)
(74) Representative: Carvajal y Urquijo, Isabel

(56) References cited:
- EP-A- 1 036 494
- ES-U- 1 066 325
- US-A- 4 269 021

## Description

### OBJECT OF THE INVENTION

The object of the present invention is a modular equipment for fruit harvesting, particularly olives, which have been removed by any procedure, which is mounted on the container of a trailer or self-propelled vehicle, comprising one or more modules, each one of them containing a winding reel and a capstan winch activated by remote-controlled engines, sheets that gather the fruits piled thereon until a loader lifts them and deposits them in the container, together with other elements that enable a greater optimization of the harvesting process. Another object of the present invention is the olive and other fruit harvesting procedure used by the aforementioned modular equipment.

### BACKGROUND OF THE INVENTION

Nowadays there exist a great number of olive harvesting systems, from those that use combine harvesters to traditional ones, which use sheets on which the olive fallen from the agitation of the olive tree are deposited, manually or mechanically. The reason for this coexistence is that the new systems have not offered an adequate answer to farmers' requirements, such as:
- Reducing the cost, in terms of investment and fixed and variable cost per kg. of collected olives.
- Reducing the harvesting period, to avoid the falling of the ripe fruit to the ground and its resulting degradation.
- Reducing to the maximum the harvesting interference with the tree production.
- Enabling the harvesting from trees with several trunks.
- Enabling the harvesting on hillsides with very steep slopes.

Combine harvesters have a reduced variable cost and great harvesting capacity but a high fixed cost, and require a high investment and costly auxiliary equipment for the harvesting logistics. Besides, they only collect olives smaller than those of optimum size, so important pruning is necessary which produces the tree lignification reducing production, and generating the need for early substitution of the plantation with the corresponding investment and production loss. Moreover, these machines do not collect from trees with several trunks and cannot operate in areas with very steep slopes, as they can easily turn over due to the height required to surround the tree. Therefore; combine harvesters, which are the most novel harvesting means, do not satisfy farmers' needs.

Another method used for olive and similar fruit harvesting is the trunk shaker with inverted umbrella, of which there exist several patents, such as ES2174727 or ES2017249 and several others, which consists of an articulated structure in an inverted umbrella shape which surrounds the trunk to harvest the olives removed by a trunk shaker located at the base thereof, all of which is supported in a tractor from which it is directed and operated. The problems of this system are that it can only be used in trees with a single trunk; that the umbrella structure itself makes it difficult to rush tree harvesting through complementary knocking down, that a special pruning is required to make the removal through shaking efficient, that it is difficult and slow to take the fruit from the umbrella into the container in the middle of trees and it cannot be done in hillsides with a very step slope, and that the tree makes it difficult to fix the shaker in the trunk grip, investing time which reduces the system productivity.

Since the new harvesting procedures have been directly oriented to reducing only the variable costs and harvesting time, since they are only two of the requirements listed, but without complying with the other three, that is, negatively altering the fruit production, or requiring important investments, or else giving up fruit harvesting from trees with several trunks or located in very step slopes, in most plantations olive harvesting is still carried out by placing sheets or nets on the ground on which the fruits removed are deposited, being later stockpiled in "bales" made of resistant material which are conveniently hooked at the ends to be lifted by cranes and which are emptied into a container when one of the hitches is released. The problem of this system is that is not very efficient since it requires multiple manual operations handling relatively a small quantity of fruit, so the variable cost of harvesting is high. Attempts have been made to provide mechanical harvesting from the sheets, such as the one described in P8903854, in which the nets on which the fruit is placed were directly collected, depositing it directly into the container. However, this system has not extended since the container needs to be really long as it needs to have two cylinders on its side in line with which to directly roll the nets deposited on both sides of the trunks, forcing it to have a great length relative to the tree plantation frame, and therefore, having a terrible maneuverability to circulate between the trees. Besides; it is necessary to interrupt the removal while the nets are being rolled, with the corresponding productivity decline of the removal equipment which is the most expensive one, and finally as it is conceived only as a new procedure for picking up commonly used nets, their ability to lift weight is very reduced and therefore, their productivity is very little.

Nowadays, there exit several olive harvesting systems which use sheets on which the olive fallen due to olive tree agitation is deposited, either manually or mechanically, such as patent ES2195723, most of which place the sheets encircling the respective olive tree. Once the olive is deposited on the sheet, it is necessary to gather it to deposit it in the corresponding trailers or containers for its later shipment to the corresponding olive-oil mill, so there exist countless systems which enable the gathering and harvesting of olives. Among them, we can mention patent ES2121646, which reveals a self-propelled machine with a fan activated by a hydraulic cylinder to group olives. Likewise, the applicant himself owns several utility models, such as ES1062228U, referring to a harvesting trailer with collapsible shaking means, or ES1066325U which reveals a fruit and/or olive harvesting tray comprising two cylinders rolling in pairs four harvesting bales encircling each olive tree to collect at once all olives from one olive tree. In all cases, the machine or device collects olives from an olive tree, one by one, so that good harvesting efficiency is obtained, since only a minimum number of olives are lost for falling outside the net, sheet or bale, as the case may be, but it does not achieve good economic efficiency.

The main objective of the present invention, is to offer the collector an advantageous olive harvesting system capable of trebling the productivity of operators, applicable to any kind of olive grove, especially indicated for those planted traditionally, which according to the experts is the one that guarantees greater productions with time, which enables the farmer to considerably increase the productivity of its work without loosing efficiency.

### DESCRIPTION OF THE INVENTION

The present invention refers to a modular equipment for olive and similar fruit harvesting, for any kind of olive grove but especially indicated for olive groves planted in a traditional manner. This modular equipment enables to increase harvesting productivity up to values higher thank 2000kg/hour per operator involved in the harvesting, thus dramatically reducing harvesting time, harvesting costs, investment needs and personnel required for the operation.

Likewise, the present invention also refers to a procedure for the harvesting of olives and similar fruit fallen by any procedure.

The modular equipment is installed on the container of a trailer or self-propelled vehicle and consists of one or several attachable modules; each one of them comprising a reel and a capstan winch both of them activated by autonomous hydraulic or electric engines, or powered from a tractor equipment, being possible to remote-control these operations by radio. The aforementioned reel has a series of main sheets reeled, which are joined together inserting snap hooks between them installed in their four corners, thus forming a string of sheets. Said string of main sheets, at one of its ends, is joined to the reel inserting the snap hooks of said end in rings tied to the end of cords which are in turn tied at the other end in anchoring points of the reel. At the other end of said spring of main sheets, the snap hooks are inserted into the free end of the so-called loader, which in turn is at its other end fixed to the structure of the modular equipment at a central anchoring point located under the reel, which is carried out by a fastening cord, cable or chain of the loader. It also has installed a capstan winch powered by an engine where a line is winded with a snap hook at its end. As auxiliary elements of the equipment, there are the so-called complementary sheets which are the mesh sheets typically used in harvesting works from the olive grove and have rings at their ends so that they can be hooked and pulled by four-wheel-drive vehicles, such as quads, or by cables.

The harvesting procedure begins with the vehicle carrying the container with the modular equipment travelling along one of the main streets of the plantation and unrolling and depositing the main sheets, which an operator extends on the streets which cross the main streets, in a parallel manner, and at a distance between them equivalent to the length of the complementary sheets, which for the occasion have been made having a length which is multiple to the width of said streets. Later, transversally to the main sheets and using as head the first of these main sheets, the complementary sheets are extended overlapping one another longitudinally and leaving the tree trunks between two of these sheets, encircled by them to create a surface for collecting the fruits when they fall; later the fruits are removed using any procedure, and after that it is pulled forward, successively, from the rear part of the complementary sheets directing and bagging the fruits which will be deposited, stockpiled on the corresponding main sheet. But also, as the length of the complementary sheets is equal to the distance at which the next main sheet has been placed, the rear end of said complementary sheet, which is the one which has been pulled, will fall right on top of the next main sheet, thus becoming the front part and arranged for future fruit removal and harvesting tasks.

Thus the fruits are stockpiled on the main sheets, being now the time in which the vehicle carrying the equipment goes by a second time to collect these main sheets. To that end, each one of the main sheets on which the fruit piles have been stockpiled are rolled up with the reel, and the aforementioned piles are dragged in the main sheet and taken to the edges of said sheet, since it takes the shape of a channel thanks to the strain and the folding carried out in a perimeter tape surrounding the sheet, up to a reception area of the loader. When the rolling up of the sheet is complete, it takes a vertical position, thus being the fruits deposited into the reception area of the loader, which in a previous maneuver had been placed on the ground under the main sheet. Alternatively to this maneuver, (specially) in a very uneven land, the cord of the capstan winch is hitched to the snap hooks of the end corners of the main sheet, so that when it is wound onto the reel, the piles of fruit are bagged in the sheet while they are dragged into the container until the end of the sheet reaches the height of the container, then an operator unhitches the cord of the sheet which had been previously wound and whose end hanged from the reel, and then keeps winding onto the reel until the fruits reach the reception area of the loader. An alternative to the two previous methods is the combination of both of them, through which a bag is formed pulling with the capstan winch of the sheet end while pulling from the head, winding it on the reel until the fruit reach the reception area of the loader and they are deposited in it when the capstan winch cord is released.

In order to lift the fruits and deposit them into the container, on which the equipment is mounted, the free end of the loader is hitched to the end of the wound last main sheet, while by keeping turning the reel the loader is also wound, bagging the fruits, lifting them and depositing them into the container, thus leaving the upper part of the loader tight, vertical and downwards, so that the container is completely emptied of fruits. The loader is made of textile material, has a concave shape to bag the corresponding volume of fruits in the lifting maneuver and is joined to the structure of the modular equipment through a single central cord, although, to maintain the mouth shape that leads the fruits to the container, its upper part is tightened by elastic bands.

### DESCRIPTION OF THE DRAWINGS

In order to complete the preceding description and to help understand better the characteristics of the invention, there will be included a detailed description of a preferred embodiment, based on a series of drawings attached to this descriptive memory, where the following is presented in a non-limiting sense by way of orientation:
Figure 1 shows a view of one of the so-called main sheets of the modular equipment object of the present invention.
Figure 2 shows one of the so-called complementary sheets of the modular equipment.
Figure 3 shows a perspective view of the structure and mechanisms of the four-module equipment mounted on a container.
Figure 4 shows a perspective view of a container of the present invention with two modular pieces of equipment, where one of them has been fully represented, except for the main sheets.
Figure 5 is a schematic perspective view of the loader of a modular equipment object of the present invention.
Figure 6 is a scheme of how the fruits are wrapped and dragged for their harvesting on the main sheets.
Figure 7 is a scheme of the operation of the equipment showing the direct harvesting of the fruits stockpiled on the main sheet.
Figure 8 is a scheme of the operation of the equipment showing the phase harvesting of the fruits stockpiled on the main sheet.
Figure 9 is a scheme of the operation of the equipment during the final winding of a main sheet and of the loader, with fruit lifting.
Figure 10a is a plan scheme of a plantation showing the initial operations of the harvesting procedure (initial sheet setting and fruit removal) associated to the modular equipment, using simple complementary sheets.
Figure 10b is a plan scheme of a plantation showing the initial operations of the harvesting procedure (initial sheet setting and fruit removal) associated to the modular equipment, using complementary sheets joined together forming strings.
Figure 11 is a plan scheme of a plantation showing the set of operations of the harvesting procedure associated to the modular equipment.

In these figures, numeric references correspond to the following pieces and elements:
1. Main sheet
2. Complementary sheet
3. Reinforcement perimeter tape
4. Snap hook or ring of the main sheets
5. Complementary sheet ring
6. Reel
7. Engine
8. Loader backing bar
9. Container
10. Anchoring point
11. Lifting cord
12. Lifting cord ring
13. Anchoring point of the lifting cord reel
14. Loader
15. Central anchoring point of the loader fastening cord
16. Elastic band
17. Elevated anchoring point of the elastic bands
18. Loader fruit reception area
19. Loader concave area
20. Great central reinforcement for catching the loader fastening cord
21. Small reinforcement for catching the loader elastic bands
22. Loader fastening cord, cable or chain
23. Anchoring point of the elastic bands
24. Winding limiter bar
25. Loader snap hook
26. Loader elevated upper edge
27. Loader side edge
28. Loader upper part
29. Union of the two loader areas
30. Reel support
31. Support crossbeam
32. Longitudinal support beam
33. Capstan winch
34. Traction line
35. Reel lids
36. Fruit piles
37. Fruit
38. Tractor
39. Trees
40. Fruit piles moved away to enable the movement of the machine
41. First line of main sheets
42. Second line of main sheets
43. Third line of main sheets
44. Fourth line of main sheets
45. Four-wheel-drive vehicle (Quad)
46. Olive harvester
47. Shaker
48. Loader anchoring line
49. Eyelets or anchoring points
50. Pulling cord
51. Main street
52. Cross street or secondary street
53. Machinery passage corridor
54. Fold
55. Ring or snap hook

### DESCRIPTION OF PREFERRED EMBODIMENTS OF THE INVENTION

As it can be seen in the figures, an object of the present invention is a modular equipment for fruit 37 harvesting, particularly olives, which have been removed from trees 39 through any procedure.

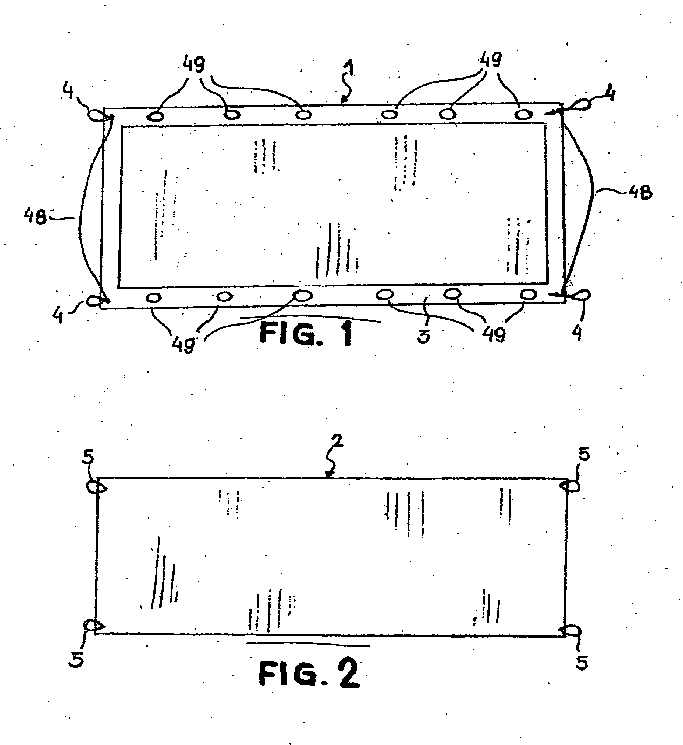

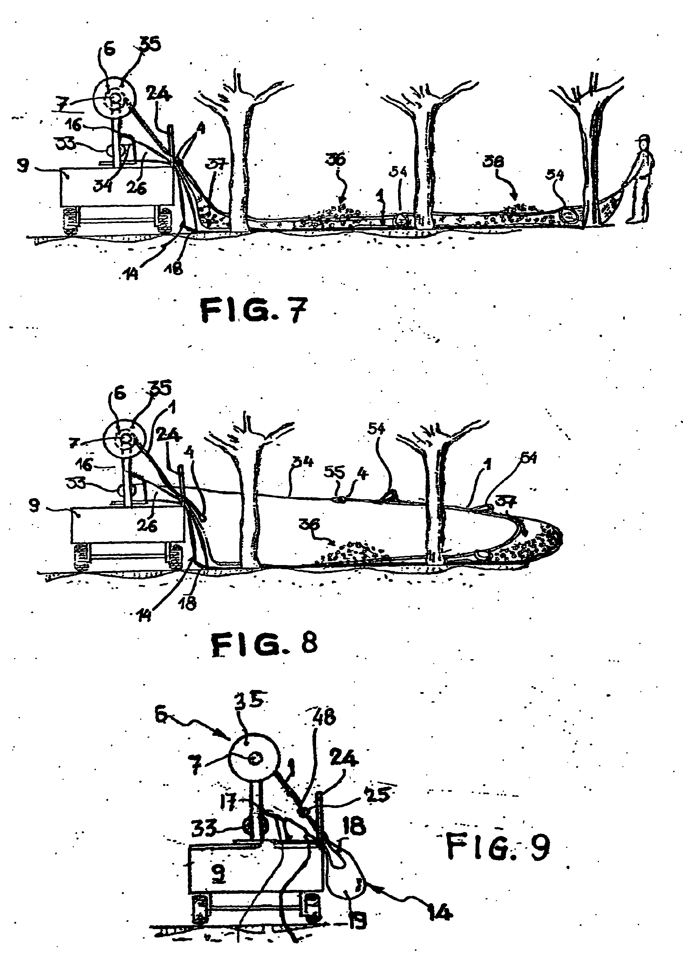

Figure 1 shows a main sheet 1 consisting of a sheet preferably made of mesh reinforced by a perimeter tape 3, so that it resists traction when fruit 37 piles are deposited on it, and so that it resists a weight over one thousand kilograms. At the corners of said perimeter tape 3 there are sewn snap hooks 4 which will serve to hitch some main sheets 1 to others as they are being collected, transporting the fruit 37 piles and depositing them in the loader receptor as it can be seen in figures 7 and 8. Along both sides of the perimeter tape 3, and conveniently distanced, there are installed some eyelets 49, or any other harvesting device, which have a double usefulness, such as being an alternative to the snap hooks 4 themselves, to be able to insert the snap hooks 4 of another main sheet 1 and thus balance the winding, or that of symmetrically tying contiguous pairs at each side of the perimeter tape 3 forming folds 54 thereon to give it a concave shape, although this latter purpose can also be achieved pleating the longitudinal seams of the mesh to the perimeter tape 3. ,

As it can be seen in figure 9, to be able to lift and load the fruits 37 deposited in the reception area 18 of the loader 14, it is necessary to wind said loader 14 onto the reel 6. Thus, after the winding of each main sheet 1 the loader 14 is further wound and to that end the snap hook 25, sewn to the free end of the loader 14, is hitched to the anchoring line 48 of the loader 14 until the whole assembly is wounded onto the reel 6 except for its upper part 28, which is in an inverted position held fast by the fastening cord, cable or chain 22 of the loader 14, being in a vertical position and tightened by the elastic bands 16. Once this is carried out, the equipment is moved to a harvesting position, the loader 14 is unrolled and with it the final end of the rolled main sheet 1, in whose snap hooks 4 the front part of the main sheet 1 to be collected is inserted. Acting in the same way the different main sheets 1 are collected, thus forming a string of them, wound onto the reel 6, the first of which will have its front snap hooks 4 inserted in the rings of the lifting cords 11, which are fastened to said reel 6 at the anchoring points 13 intended to that end.

Figure 2 shows a complementary sheet 2 which is made of mesh of the kind normally used in the harvesting of fruits 37 such as olives, with rings 5 sewn at its corners, and which has the peculiarity that its length must be a multiple of the distance between the tree 39 trunks from which the fruits are to be harvested.

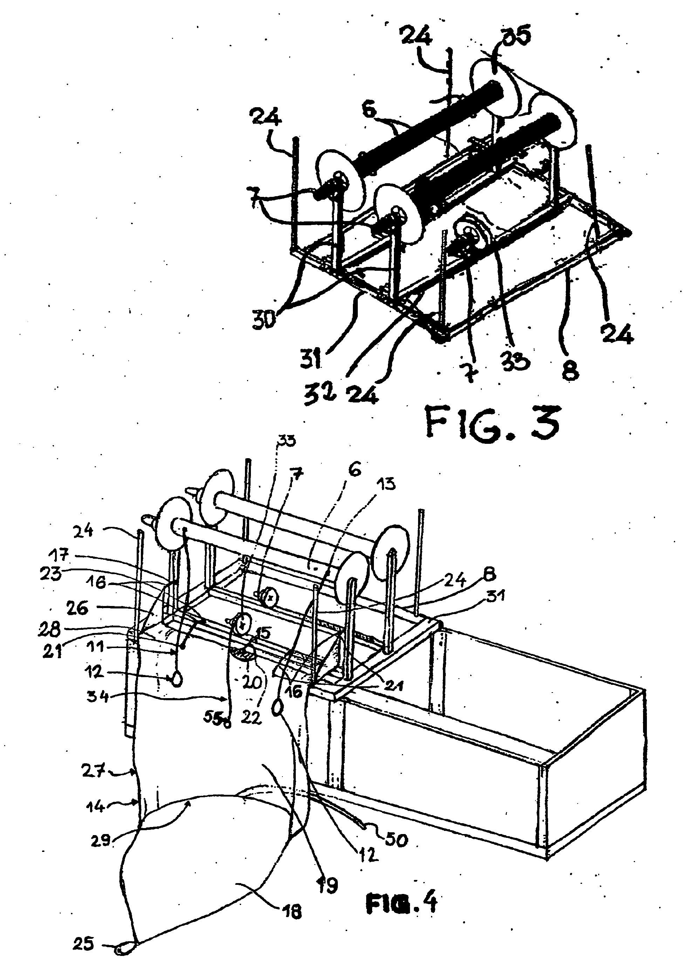

As it can be seen in figures 3 and 4 a module of the harvesting equipment object of the present invention has a reel 6 with lids 35 powered by an engine 7 and preferably remote controlled, onto which a string of main sheets 1 and a loader 14 are wound. Additionally, the equipment has a motor-driven capstan winch 33 and preferably remote controlled, which winds a line 34 at which end it has a ring or snap hook 55. The modular equipment is self-supporting since the reel 6 and its engine 7 are supported by supports 30, which are in turn supported by a reticular structure comprising a supporting longitudinal beam 32 which supports the motor-driven capstan winch 33 and two supporting crossbeams 31 joined by the backing bar 8 of the loader 14, which supports at its ends the winding limiter bars 24. All of this is joined by appropriate fastening elements to the loader 9, which can be towed or self-transported but in any case it will swing forwards and backwards, which enables to unload the fruits 37 and to maintain the horizontal position of the backing bar 8 during the lifting of the fruits 37 in sloping lands.

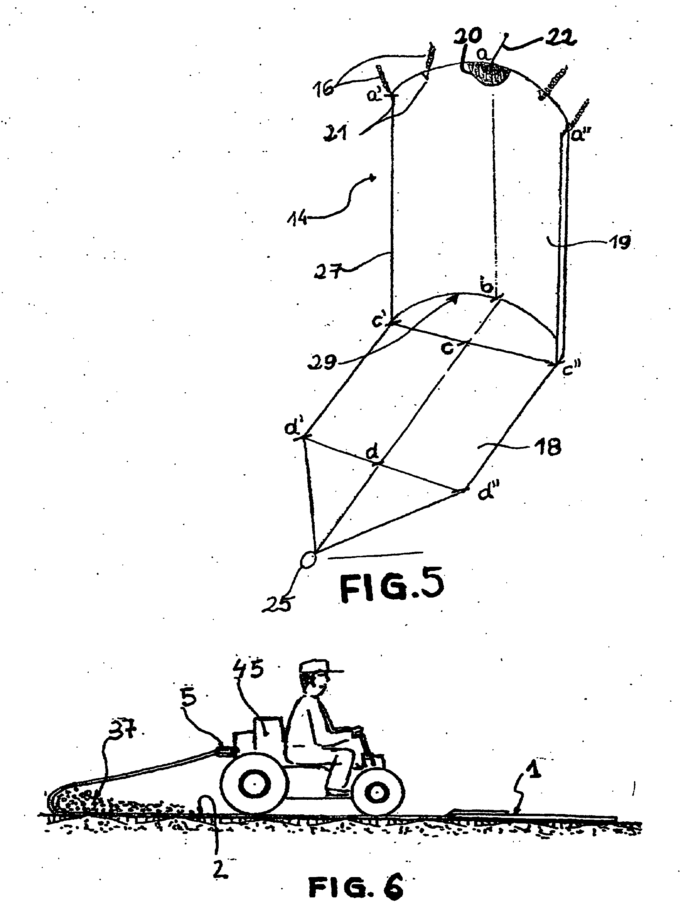

The loader 14, shown in figures 4 and 5, is made of a resistant textile material capable of loading thousands of kilograms of fruits 37 and resisting thousands of maneuvers and it has a fruit reception area 18, whose perimeter is convex in the union 29 with the loader concave area 19, which has a measured and cylinder surface as it can be seen in figure 5. In this figure it is verified that the length of the weave from the upper end of the loader 14 defined by the a-a'-a" line until the d-d'-d" line is larger as it gets closer to the center, being maximum at the centre, where it exceeds in a length equal to that of the b-c cord that of the a"-c"-d" edge or that of the a'-c'-d' edge. That is why, when the snap hook 25 is hitched to the loader anchoring line 48 of the main sheet 1 loader which is being wound onto the reel 6, the loader 14 goes up with the central part backed up and lower than the edges when the alignment c-c'-c" starts to be lifted, being created a bag for the fruits which is moved upwards while they are lifted to exceed the height of the loader backing bar 8 to end up falling into the container 9. To take the fruits 37 in the upper section, the edges of the loader upper part 26 are elevated since they are tightened by the elastic bands 16 attached to the elevated anchoring points 17 of said elastic bands 16. To that effect there also contribute the elastic bands 16 which together with the reinforcements 21 tighten the upper edge 26 of the loader 14 to the flush anchoring points 23, creating a mouth through which all fruits 37 lifted fall into container 9 when the cylinder or reel 6 is further wound all the elevator 14 is wound except for the upper part thereof 28, retained by the cord, cable or chain 22 which is vertically tightened.

An alternative to this kind of loader 14 is also made of textile material but now flexible, so that the bag is formed when the material gets loose under the weight of the fruits 37. In this case the loader 14 will be made of only one cloth without requiring the union of the two areas 29, although it would be necessary to add a perimeter tape to secure there is no deformation of the edges and thus create the difference in length between the center and the edges which secures the formation of the bag. In this case the fastening to the elevated anchoring points 17 would not be done with elastic bands but rather with cords or cables or chains.

To facilitate the unrolling of the loader 14 it has sewn on its rear part a pulling cord 50 which is at reach for the operators from outside the container 9 when the loader 14 is wound on the reel 6.

The fruit 37 harvesting procedure is shown in figures 6, 7, 8, 9, 10a, 10b and 11.

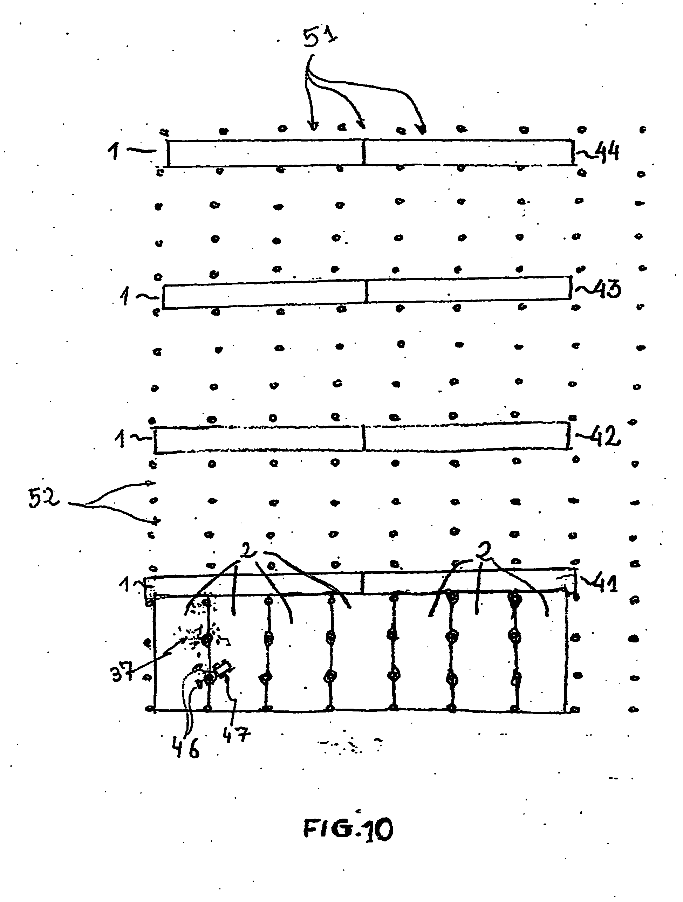

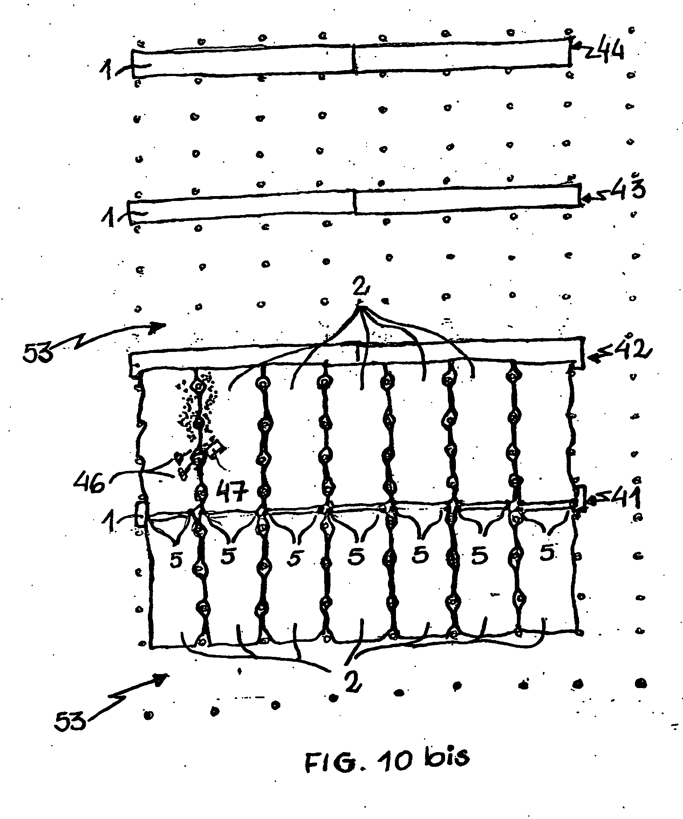

In the first place, the main 1 and complementary 2 sheets are placed on the field, as it can be seen in figure 10a.

A tractor pulls a trailer in whose container 9 it carries a modular equipment object of the invention formed by two reels 6, each one of them destined to one side of the trailer, and it has wound on its reels 6 an appropriate number of main sheets 1 which can be as high as required. For simplicity purposes, in the example shown in figure 10a we suppose there are four main sheets 1 on each reel 6, that is, eight in total. The tractor with the trailer circulates along a main street 51, stops at the center of a crossing with a cross street 52 and deposits two main sheets 1, one on its left and another one on its right, centered and along said cross street 52. It then goes forward to leave space and for an operator to extend and lay the ends of the sheets 1 one on top of the other to leave a continuous band as it appears in the four strings of main sheets 41, 42, 43, 44. It keeps on advancing along the main street 51 for a distance equivalent to a length of the complementary sheets 2 which are to be placed transversely to the main sheets 1, and thus it will be located at another crossing with another cross street 52, carrying out the same operation until, for example four parallel lines of pairs of mains sheets 1 are formed, separated between one another by a distance equivalent to the length of the complementary sheets 2. Once each pair of main sheets 1 has been deposited and the container 9 advanced, another team of operators with the help of a four-wheel-drive vehicle or quad deposits some complementary sheets 2 with the front end on top of the first line 41 of main sheets 1, transversely to it, and extended covering all the ground under the trees 39 to the side opposite that where the main sheet 1 lines were formed. Thus it is covered an area twice the length of the main sheets 1 multiplied by the length of the complementary sheets 2, which will be a rectangle if the trees 39 are planted as a "real frame" (lines of trees 39 perpendicular to one another), or a rhomboid if they were planted in a staggered formation. It is in this area where the fruit 37 removal begins.

The removal machinery, such as the shaker, has to cross the cross streets to carry out its task, however, there are plantations in which, due to how dense the trees 39 are it can only by made through corridors 53 very far away from one another. In these cases, as it can be seen in figure 10b, the main sheets 1 would be placed as it has been done so far, but the complementary sheets 2 would be joined together in order to in this way exceed the whole section of the street between two of the aforementioned passage corridors 53 between the main streets. The union will be carried out in pairs by the rings (5) at the ends, which will be on top of the corresponding main sheet 1, tying up the rings 5 with lines and/or snap hooks, thus there being a string of complementary sheets 2 with the unions between them on top of the corresponding main sheets 1, covering the whole section of the main street between the two corridors 53.

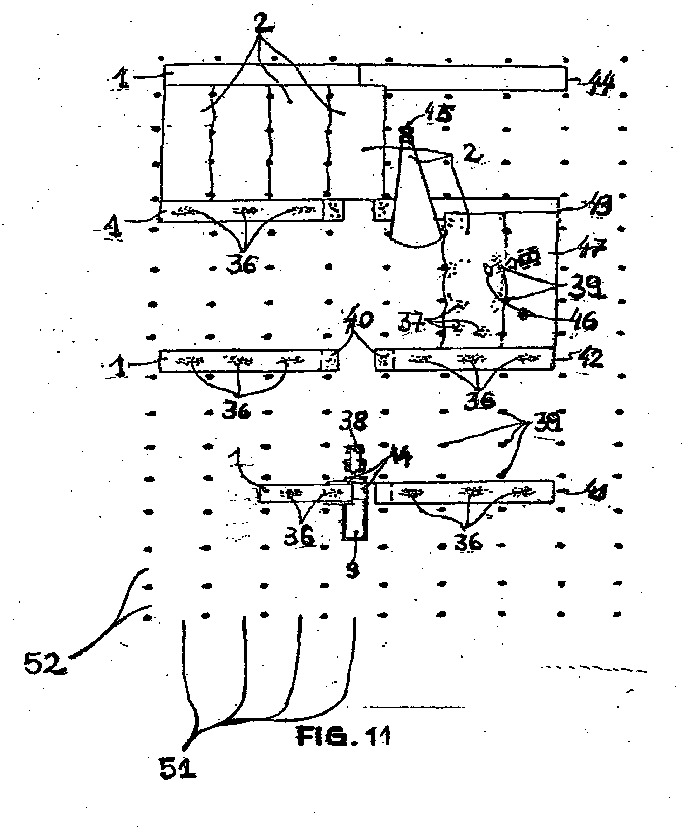

Next, the fruits 37 are removed and they fall onto the sheets, which is schematically represented in figures 10 and 11.

The fruit 37 removal system does not form part of the procedure object of the present invention, and it can be any system. In this case, for simplicity purposes, in the exposition we have supposed that it is carried out by only one removal system, although the system enables to provide service to two or even three pieces of equipment when trees 39 with several trunks are grown where the shakers are slower. Therefore, a piece of equipment, formed by one or more shakers 47, assisted by an indefinite number of olive harvesters 46, start the fruit 37 removal circulating on top of the complementary sheets 2 following the main streets, starting at one end until the end of the line of trees 39 which have their whole ground covered with complementary sheets 2, to turn around and continue with the parallel line until the final one. Once the removal is over, all fruits 37 will be deposited on the complementary sheets 2.

The following stage is that of fruit 37 harvesting into piles on the main sheets, which is shown in figures 4, 6, 7, 8, 10a, 10b and 11.

In order to stockpile the fruits 37 deposited on each complementary sheet 2 onto the main sheet 1 on which its head rests, it will be pulled upwards from the rear end of the aforementioned complementary sheet 2 towards its front end, going over the aforementioned head until reaching the next line of main sheets 1. In this maneuver the fruits 37 are wrapped forming a bag which takes them to the head of the complementary sheet 2, that is, right up to the main sheet 1, where the fruits 37 are deposited in long piles 36, as it can be seen in figures 7 and 8. This occurs exactly when the other end has positioned itself as the new head on top of the following line of main sheets 1. The bagging of the fruits 37 occurs since the material of the complementary sheets 2 is mesh and therefore, flexible. Figure 6 shows this stockpiling action using a four-wheel-drive vehicle or quad 45, although this action can be manual or any other mechanical procedure can be used to carry it out, such as pulling from the capstan winch 33 line 34 of the modular equipment conveniently located. Figure 11 shows the process where the stockpiling has been initially carried out between the first line 41 and the third line 43 to leave the fruit piles 36 on the second line 42, and it is being performed between the second line 42 and the fourth line 44 to leave the fruit piles 36 on the third line 43. The system used for the dragging and formation of the fruit piles 36 deposited on the main sheets 1 when the fruits 37 are very soft or delicate which can be damaged by rolling wrapped with the aforementioned system, consists of dragging the complementary sheets 2 pulling from their front part, so that the fruits 37 will be moved without rolling on it, but in this case for them to be deposited on the main sheet 1 when they go by it, the complementary sheet 2 will have to surpass the barrier formed by any contrivance that the fruits 37 due to the gravity cannot overcome, thus being formed just like in the previous case the fruit piles 36 on the corresponding main sheet 1.

In plantations in which since the shaker 47 has to go through corridors 53 which are very far away from one another and since for this reason a string of complementary sheets 2 had to be formed, said string will be treated as if it were a single complementary sheet 2 and it will be collected as shown in figure 6, but what will occur is that when the fruit bag goes by at the height of each one of the main sheet 1 lines, it will unload on it the fruits 37 collected at the corresponding section since the complementary sheets 2 are hitched in it but only by the rings (5) located at their corners leaving a great opening through which the fruits 37 will be expelled. In all the above cases, when four-wheel-drive vehicles are used to pull from the sheets, the operators will previously lift them lengthwise in order to move the fruits 37 creating a corridor along which to circulate without crashing them.

Next, the fruit 37 piles are loaded into the loader 14 and then into the container 9 of the machine, being these operations represented in figures 3, 4, 7, 8, 9 and 11.

Once the fruits 37 are stockpiled in piles 37 on the main sheets 1, an operator makes way for the tractor with the trailer to go along the main street by pulling from each one of the ends of the main sheets 1 towards the back to move the fruit piles 40 to the edges of said street, as it can be seen in figure 11. Once the operator has made way for the tractor with the trailer carrying the equipment, said tractor goes forward until the reels 6 are centered with the first line 41 of main sheets 1 to be collected. The operator gives a command using a radio to unroll the loader 14 while s/he pulls from the pulling cord 50 of said loader 14 shown in figure 4, thus causing it to unroll. If the main sheet is to be collected there will no be no previous winding of the reel 6 so the snap hook or hitch 25 of the loader 14 will be hitched to the rings 12 of the lifting cords 11. The loader 14 will be unhitched and the necessary movements will be made for it to be conveniently deposited on the ground as shown in figure 4. If there was a previous main sheet 1 already wound on the reel 6, the rings 12 of the lifting cords 11 would not appear and instead the end of the main sheet 1 would appear, which would have been wound onto the reel 6 last. It is from said cord 48 that the aforementioned snap hook or hitch 25 of the loader 14 would be unhitched. Later, the operator will take the front part of the main sheet 1 which is on the ground with the fruit piles 36 and 40 and s/he will hitch in a parallel way the front snap hooks 4 of said sheet and the rear snap hooks 4 of the front main sheet 1 which is already wound. If the winding was uneven and therefore the string of main sheets 1 and the snap hooks 4 are not parallel to the ground, the eyelet 49 closest to this position can be used to correct the unbalance and obtain the maximum parallelism. Afterwards, the operator will give the command using a radio of winding onto the reel 6, being said winding represented in figure 7. The fruit piles 36 advance towards the container until -as it can be seen in figure 7- they reach the upward vertical piling up there all the fruits 37, until when the winding of the main sheet 1 is complete they are deposited in the loader reception area 18. At this moment the operator will take the loader snap hook 25, shown in figure 9, and s/he will hitch it to the loader anchoring line 48 of the main sheet 1, continuing the winding of said main sheet 1 and of the loader 14, starting in it by the fruit reception area 18, while the fruits 37 are lifted in the bag formed by the loader 14 until exceeding the height of the loader edge 9 represented by the backing bar of the bale 8, as seen in figures 3 and 4, from which there fall into the container 9 through the mouth formed by the two elevations of the loader upper part 28 and the central part thereof tightened by the elastic bands 16 fixed to the harvesting reinforcements 21 thereof. Later, the operator will collect the main sheet 1 of the other side and advance to the following main sheet 1 line and carry out the same operations of harvesting and loading into the container 9 until it is full. In plantations on a very steep slope the fruits 37 will tend to escape from the main sheet 1 if the aforementioned procedure is followed; therefore, the actions shown in figure 8 will be taken. In said figure it can be seen that an operator will take the end of the traction line 34 of the capstan winch 33 and take it to the end furthest away from the main sheet 1 to be collected, to hitch the ring 55 tied to it to both snap hooks 4 fastened on its corners, will give the command of winding the reel 33, preferably using a radio, until said end of the main sheet 1 reaches the height of the container 9, where it will unhitch the ring 55 of the snap hooks 4 and hooking them, in parallel way, to the snap hooks 4 of the main sheet 1 wound on the reel 6 which were hanging above the loader 14 when the snap hook 25 was unhitched from it. If the slope is very steep, said snap hooks 4 will have been used to hitch those of the front part of the sheet being collected and avoid its shifting when the fruits 37 fall, so it will be necessary to remove them before the aforementioned maneuver. The fruits 37 will be gathered and bagged in the main sheet 1 but not deposited into the fruit reception area 18 of the loader 14 yet, so the operator will give the command, preferably using a radio, to wind the reel 6 until the main sheet 1 is wound as the previous one, the fruits being in the reception area 18 of the loader 14, and then the fruits 37 are deposited into the container 9 and the harvesting from a new position begins. A third, harvesting option consists of a combination of the two previous ones, in which the capstan winch 33 pulls from the rear part of the main sheet 1 forming a bag which prevents fruits 37 from going out from the rear part, while said main sheet is wound onto the reel 6 until the fruits 37 reach the reception area 18 of the loader 14, being then unloaded into it when the capstan winch snap hook 55 is released and the final part of the main sheet 1 is wound.

The last stage is the unloading of the container 9 and start of a new cycle. Once the container 9 is full, it is unloaded either onto a hopper of the olive-oil mill, or into another container for its transportation by truck and in this latter case it will be carried out by swinging from a loading bay or lifting the container 9 when the trailer carrying it offers that possibility. Another option is that the vehicle has container holders, so the full container 9 is replaced by and empty one, and so on. As it can be seen, there exist several unloading possibilities which will require different operation times. As it is intended not to interrupt the fruit 37 removal procedure, this is achieved placing the main sheets 1 wound onto the reels 6 in the loading process into new lines at the head, before unloading to cyclically give new gorge to the knocking down equipment. In any case, the number of main sheets 1 can be increased indefinitely, and it will be proportionate to the fruit removal means used, and to the distance at which the container 9 unloading site is located, taking into account that in a particular embodiment, the equipment object of the present invention has a harvesting capacity higher than 10,000kg/hour.

It is not deemed necessary to extend this description further for any expert on the subject to understand the scope of the present addition, as well as the technical effects and new benefits which can be derived from it.

The terms under which the present technical memory has been written should be considered in their widest and least limiting sense compatible to the essence of the addition described and claimed in it.

## Claims

1. Modular equipment for fruit harvesting, **characterized in that**
- it comprises at least one module which can be installed in a container (9) of a towed or self-propelled vehicle,
- and **in that** each one of the modules comprises
- a remote-controlled and motor-driven reel (6) supported horizontally on
- a support structure fixed to the container (9), having a backing bar (8) parallel to the reel (6) at a level lower than it,
- a plurality of main sheets (1), which can be coupled to each other, for stockpiling fruit (37) removed from trees (39), which can be rolled onto and unrolled from the reel (6),
- a plurality of complementary sheets (2), which are placed in a transversal position to the main sheets (1), for fruit (37) harvesting and their stockpiling on the main sheets (1),
- a loader (14) for the reception and unloading of fruits (37) into the container (9), which can be rolled onto and unrolled from the Feel (6) and which can be coupled to the main sheets (1) at one end, and fastened to the support structure, at a level lower than the reel (6), through a tightening element.

2. Modular equipment for fruit harvesting, according to claim 1, **characterized in that** the loader (14) is made of textile material and **in that** when coupled to each one of the main sheets (1) to be longitudinally wound onto the reel (6), keeping the other end fastened by means of a tightening element to the support structured and its upper part (28) resting on the backing bar (8), its central part is lower than its edges (27) during its elevation movement until exceeding the height of the aforementioned backing bar (8), either because of its configuration or for a gravitational effect.

3. Modular equipment for fruit harvesting, according to any of the preceding claims, **characterized in that** the loader (14) is made of textile material rigid to traction, and it has a fruit, reception area (18), whose perimeter line is convex in its union (29) with a loader concave area (19), and **in that** the upper part (28) of the loader (14) has in its corners and in the intermediate part between them and its center reinforcements (21) to catch the elastic bands (16), and in its central part a central reinforcement (20) to catch a loader (14) fastening cord (22), and **in that** the elastic bands (16) that pull from the corners of the loader upper part (28) are held by a support structure in elevated anchoring points (17) with respect to the loader backing bar (8), while the cord (22) is tied to a central anchoring point (15) located at the center of the support structure at the same level or lower than said backing bar (8), and the elastic bands (16) that pull from the intermediate part between the corners and the central reinforcement (20) are tied to the anchoring points (23) of the support structure, also at the same level or lower than said backing bar (8), and **in that** the outer edge of the loader (14) reception area (18) has at its end at least one snap hook (25).

4. Modular equipment for fruit harvesting, according to any of the preceding claims, **characterized in that** the main sheets (1) are made of textile material, rectangular and framed by a perimeter tape (3) made of a material highly resistant to traction, have at their corners sewn to said perimeter tape (3) snap hooks (4), and they have at both ends anchoring lines (48) whose length is substantially the same as the width of said main sheets (1), and **in that**, additionally, on the perimeter tape (3), in the area corresponding to the longitudinal edges they have a series of eyelets (49) apart from one another.

5. Modular equipment for fruit harvesting, according to any of the preceding claims, **characterized in that** the main sheet (1) which is hitched or unhitched to the reel (6) does so by means of two snap hooks (4) of one of their ends, in rings (12) tied to lifting cords (11) fixed to the reel (6) in anchoring points (13), and **in that** this main sheet (1) is hitched or unhitched to at least a second main sheet (1), by means of the insertion and release of the snap hooks (4) from the front part of the following main sheet (1) to the rear part of the previous main sheet (1), when the reel (6) winds the string formed by the main sheets (1) and unwinds it to deposit the sheets (1) on the ground, and **in that** each time the winding and unwinding of a main sheet (1) is carried out, the loader (14) snap hook (25) is hitched or unhitched to the loader (14) anchoring line (48).

6. Modular equipment for fruit harvesting, according to any of the preceding claims, **characterized in that** it has a plurality of complementary sheets (2) made of mesh material in the form of a parallelogram at which corners they have rings (5) sewn to them and which have a length equal to a multiple of the width of the cross or secondary streets (52) from where fruit is to be harvested.

7. Modular equipment for fruit harvesting, according to any of the preceding claims, **characterized in that** on the support structure itself it has installed a capstan winch (33).

8. Fruit harvesting procedure using a modular equipment according to claims 1-7, **characterized in that** it comprises the following stages:
- placing main (1) and complementary (2) sheets on the ground,
- removing fruits (37) from the trees (39), which fall mainly on the complementary sheets (2),
- stockpiling fruits (37) in piles (36) onto the main sheets (1),
- harvesting fruits piles (36) in the loader (14), and loading them in the container (9) of the vehicle, and
- unloading the container (9) and starting a new cycle.

9. Fruit harvesting procedure according to claim 8, **characterized in that** the main sheets (1) are extended on cross streets (52) transversal to the main streets (51), where the vehicle circulates, separated from one another by a distance which is substantially the same as the length of the complementary sheets (2).

10. Fruit harvesting procedure according to any of the claims 8-9, **characterized in that** the complementary sheets (2) are laid on the main streets (51) with their front ends on the main sheets (1) and their rear ends directed to the area of trees (39) from which the fruits are being harvested, covering the ground and encircling the tree (39) trunks of all parallel main streets (51) which intercept said main sheets (1).

11. Fruit harvesting procedure according to any of the claims 8-10, **characterized in that** once the fruits (37) have fallen on the complementary sheets (2), said complementary sheets (2) are turned forward bagging the fruits (37) and transporting them to deposit them in piles (36) on the main sheets (1), and **in that** through this action the complementary sheets (2) are in turn placed in the same relative position with respect to the line of main sheets (1) that is forward, thus starting the next fruit (37) removal and stockpiling cycle .

12. Fruit harvesting procedure according to claims 8-10, **characterized in that** the complementary sheets (2) are joined together tied by their rings (5) forming strings, of equal or bigger length that that existing between the two contiguous corridors (53) and placed said strings in such a way that the union between the two complementary sheets (2) coincides over the corresponding main sheet (1) laid before, covering the whole ground and encircling the tree (39) trunks of all parallel main streets (51), which intercept said main sheets (1) between the two corridors (53) for the passage of the vehicle carrying the container (9).

13. Fruit harvesting procedure to the preceding claim, **characterized in that** once the fruits (37) have fallen on complementary sheet (2) strings, said complementary sheet (2) strings are turned forward depositing the fruits (37) on the main sheets (1), located at the union of two complementary sheets (2), until the forward part of the first complementary sheet (2) of the string is located in the following corridor (53), and **in that** through this action the complementary sheet (2) strings are placed in the same relative position with respect to the corridors (53) but forward, thus starting the next fruit removal and stockpiling cycle.

14. Fruit harvesting procedure according to any of the claims 8-13, **characterized in that** in order to deposit the fruit piles (36) in the loader (14) the front snap hooks (4) of the main sheet (1) on which the fruit piles (36) are stockpiled to the rear snap hooks (4) of the previous wound main sheet (1), or to the rings (12) of the elevation cords (11) if it were the first one, the main sheet (1) is rolled onto the reel (6) until the end of said sheet (1) is hanging after depositing the fruits (37) in the fruit reception area (18) of the loader (14).

15. Fruit harvesting procedure according to any of the claims 8-13, **characterized in that** in order to deposit the fruit piles (36) in the loader (14) the ring (55) of the traction line (34) end of the capstan winch (33) in inserted in the rear snap hooks (4) of the main sheet (1), on which the fruit piles (36) are located, the traction line (34) is rolled up until said snap hooks (4) reach the rear snap hooks (4) of the previous wound main sheet (1) or to the rings (12) of the lifting lines (11) it were the first one, to insert them in a parallel way in them, then it is commanded that the reel (6) winds until the end of said main sheet (1) is hanging after depositing the fruits in the fruit reception area (18) of the loader.

16. Fruit harvesting procedure according to any of the claims 8-15, **characterized in that** in order to lift and deposit in the container (9) the fruit deposited in the loader reception area (18), the snap hook (25) of the loader (14) is hitched to the loader anchoring line (48) on the main sheet (1), the reel (6) is wound until most part of the loader (14) is rolled up on it and the loader (14) fastening line (22) is tightened and practically in a vertical position aiming at the reel (6) after emptying the fruits (37) into the container (9).

## Patentansprüche

1. Modulare Vorrichtung für die Obsternte, **dadurch gekennzeichnet, dass**
- es besteht aus wenigstens einem Modul das in einem Container (9) eines Schlappfahrzeuges oder eines selbstfahrende Fahrzeug installiert werden kann,
- und dass jedes Modul folgende Unterteile umfasst:
- eine fernbediente oder motorbediente Haspel (6), die senkrecht in einem am Container (9) befestigte Halterungsstruktur gehalten wird, mit einer zur Haspel (6) paralellen und sich niedriger befindenden Unterlage (8),
- eine Mehrzahl von Haupteinlagen (1), die untereinander ankoppelbar sind, um das aus den Bäumen (39) stammende Obst (37) zu lagern und die auf der Haspel (6) auf- und abwickelbar sind,
- eine Mehrzahl von zusätzlichen Einlagen (2), die sich in einer Querlage zu den Haupteinlagen (1) befinden, für die Obsternte (37) und dessen Lagerung auf den Haupteinlagen (1),
- ein Ladegerät (14) für den Empfang und das Entladen des Obstes (37) in den Container (9), das an der Haspel (6) auf- und abgewickelt werden kann und sich an die Haupteinlagen (1) über eines de Enden koppeln und mittels eines Andruckelementes auf eine niedrigere Höhe als die Haspel (6) an die Halterungsstrukturbefestigt werden kann.

2. Modulare Vorrichtung für die Obsternte nach Anspruch 1, **dadurch gekennzeichnet, dass** das Ladegerät (14) aus Textilmaterial besteht und dass, wenn es an die Haupteinlagen (1) gekoppelt ist um von der Haspel (6) in Längsrichtung aufgewickelt zu werden, wobei das andere Ende mittels eines Andruckelementes am Halterungsstruktur befestigt ist und sein oberes Teil (28) an der Unterlage (8) anliegt, das mittlere Teil während der Hebebewegung niedriger liegt als die Ränder (27), bis die Höhe der genannten Unterlage (8) überschritten wird, sei es wegen der Gestaltung oder wegen der Schwerkraft.

3. Modulare Vorrichtung für die Obsternte, nach eines de vorigen Ansprüche, **gekennzeichnet dadurch dass** das Ladegerät (14) aus zugfestem Textilmaterial besteht, und über einen Bereich für den Empfang von Obst (18) verfügt, dessen Umfangslinie konvex ist in der Verbindung (29) mit dem konkavem Bereich des Ladegeräts (19), y weil der obere Teil (28) des Ladegeräts (14) in den Ecken und in den dazwischenliegenden Teilen und in der Mitte Verstärkungen (21) aufweist um daran die elastischen Streifen (16) festzuhaken, und im mittleren Teil eine mittlere Verstärkung (20) aufweist um ein Befestigungsseil (22) des Ladegerätes (14) zu befestigen, und weil die elastischen Streifen (16) die an den Ecken des Oberteiles (28) des Trägers spannen sich mittels einer Trägestrucktur an Verankerungspunkten (17) befestigt sind die sich höher als die Unterlage (8) des Ladegeräts befinden, während das Seil (22) an einem zentralen Ankerungspunkt (15) befestigt ist der sich mitten in der Halterungsstruktur befindet, auf der gleichen Höhe oder niedriger als die Unterlage (8), und die elastischen Streifen (16) die im mittleren Teil zwischen den Ecken und die mittlere Verstärkung (20) spannen, an den Ankerungspunkten (23) der Halterungsstruktur befestigt sind, auch auf der gleichen Höhe oder niedriger als diese Unterlage (8), und weil der äußere Rand des Empfangsbereiches (18) des Ladegerätes (14) an den Enden mindestens ein Haken (25) aufweist.

4. Modulare Vorrichtung für die Obsternte, nach eines der vorigen Ansprüche, **dadurch gekennzeichnet, dass** die Haupteinlagen (1) aus Textilmaterial bestehen, rechteckig sind und von einem aus sehr zufgestigem Material hergestellten Umfangsstreifen (3) umrahmt sind, in den Ecken an dem Umfangsstriefen (3) Haken (4) genäht sind und an beiden Enden Ankerungskabel (48) aufweist, deren Länge wesentlich die selbe ist wie die Breite der Haupteinlagen (1), und weil zusätzlich an dem Umfangsstreifen (3), im den Lángstseiten entsprechende Bereich eine Reihen von voneinander getrennten Ösen (49) aufweist.

5. Modulare Vorrichtung für die Obsternte, nach eines der vorigen Ansprüche, **dadurch gekennzeichnet, dass** die Haupteinlage (1) die an die Haspel (6) ein oder ausgehakt wird, dies mittels zwei Haken (4) eines der beiden Enden durchführt, in Ringen (12) die an der Haspel (6) an Ankerpunkten (13) befestigten Hebeseilen (11) angebracht sind, und dass diese Haupteinlage (1) an mindestens eine zweite Haupteinlage (1) ein oder ausgehakt wird, mittels der Einführung und Befreiung der Haken (4), von der vorderen Seite der nächsten Haupteinlage (1) bis zur hinteren Seite der vorigen Haupteinlage (1), wenn die Haspel (6) das aus den Haupteinlagen (1) bestehende Band aufrollt und ausrollt um die Einlagen (1) auf den Boden zu legen und weil jedes Mal dass eine Haupteinlage (1) aufgerollt oder ausgerollt wird, der Haken (25) des Ladegeräts (14) an das Ankerkabel (48) des Ladegeräts (14) einhakt oder aushakt.

6. Modulare Vorrichtung für die Obsternte, nach eines der vorigen Ansprüche, **dadurch gekennzeichnet, dass** eine Vielzahl von zusätzlichen Einlagen (2) die aus einem parallelogrammförmigen, vermaschten Material bestehen, an deren Ecken die Ringe (5) befestigt sind und die eine Länge aufweisen die gleich das Vielfache der Breite der zusätzlichen oder Querstraßen (52) von woher das Obst gesammelt wird.

7. Modulare Vorrichtung für die Obsternte, nach eines de vorigen Ansprüche, **gekennzeichnet dadurch dass** in der Halterungsstruktur selber eine Spillhaspel (33) eingebaut ist.

8. Verfahren zur Obsternte in dem die modulare Vorrichtung nach Ansprüchen 1-7 verwendet wird, **dadurch gekennzeichnet, dass** er folgende Schritte umfasst:
- die Haupteinlagen (1) und zusätzlichen Einlagen (2) werden auf den Boden gelegt,
- das Obst (37) wird aus den Bäumen (39) gepflückt, und fällt hauptsächlich auf die zusätzlichen Einlagen (2).
- das Obst (37) wird auf die Haupteinlagen (1) in in Haufen (36) gesammelt,
- die Obsthaufen (36) werden im Ladegerät (14) gesammelt, und in den Container (9) des Fahrzeuges geladen und
- der Container (9) wird geleert und ein neuer Vorgang beginnt.

9. Verfahren zur Obsternte nach Anspruch 8, **dadurch gekennzeichnet, dass** die Haupteinlagen (1) sich in den Querstraßen (52) estrecken, quer zu den Hauptstraßen (51), in denen das Fahrzeug sich fortbewegt, voneinander auf einen Abstand getrennt die wesentlich die selbe ist wie die Länge der zusätzlichen Einlagen (2).

10. Verfahren zur Obsternte nach einem der Ansprüche 8-9, **dadurch gekennzeichnet, dass** die zusätzlichen Einlagen (2) sich in den Hauptstraßen (51) estrechen, mit den vorderen Enden auf den Haupteinlagen (1) und deren hinteren Enden in die Richtung der Bäume (39) orientiert, woher das zu sammelnde Obst stammt, wobei der Boden bedeckt und die Stämme der Bäume (39) aller senkrechten Straßen (51) die die Haupteinlagen (1) kreuzen, umringt werden.

11. Verfahren zur Obsternte nach einem der Ansprüche 8-10, **dadurch gekennzeichnet, dass** sobald das Obst (37) auf die zusäzlichen Einlagen (2) gefallen ist, diese Einlagen (2) fegalten werden und das Obst (37) verpacken, wobei das Obst transportiert wird um damit auf den Haupteinlagen (1) Haufen (36) zu bilden, sodass auf die Art die zusätzlichen Einlagen (2) jeweils in die gleiche Position gebracht werden bezüglich die Linie der weiter vorne liegenden Haupteinlagen (1), sodass auf die Weise der neue Leerungs- und Speicherungsvorgang (37) beginnt.

12. Verfahren nach den Ansprüchen 8-10, **dadurch gekennzeichnet, dass** die zusätzlichen Einlagen (2) untereinander verbunden und an die Ringe (5) befestigt sind, wobei sie Sreifen bilden die genauso oder länger sind als die Länge die zwischen zwei nebeneinanderliegenden Gängen (53) und diese Streifen so geordnet werden dass die Verbindung zwischen zwei der zusätzlcihen Einlagen (2) mit der entsprechenden vorgelegten Haupteinlage (1) übereinstimmt, wobei der gesamte Boden bedeckt wird und die Baumstämme (39) aller paralellen Hauptstraßen (51) die die Haupteinlagen (1) kreuzen umringt werden, zwischen zwei Gängen (53), für den Durchgang der Containerfahrzeuges.

13. Verfahren zur Obsternte nach einem der vorigen Ansprüche, **dadurch gekennzeichnet, dass** sobald das Obst (37) auf die Streifen der zusätzlichen Einlagen (2) gefallen ist, diese Streifen (2) nach vorne gefalten werden und das Obst (37) auf die Haupteinlagen (1) die sich auf der Verbindung der beiden zusätzlichen Einlagen (2) befinden, gelegt wird, bis der überlappende vordere Teil der ersten zusäzlichen Einlage (2) des Streifens sich im nächsten Gang (53) befindet, und dass auf diese Art die Streifen der zusätzlichen Einlagen (2) in die gleiche aber vorangeschobenen Position bezüglich der Gänge (53) liegen, sodass auf die Weise der neue Leerungs- und Speicherungsvorgang beginnt..

14. Verfahren zur Obsternte nach einem der Ansprüche 8-13, **dadurch gekennzeichnet, dass** um die Obsthaufen (36) in das Ladegerät (14) abzusetzen die vorderen Haken (4) der Haupteinlage (1) auf der die Obsthaufen (36) gelagert werden bis zu den hinteren Haken (4) der vorigen aufgerollten Haupteinlage (1), oder bis zu den Ringen (12) der Hebeseile (11) falls es sich um die erst handelt, die Haupteinlage (1) in der Haspel (6) aufgerollt bleibt bis das Ende dieser Einlage (1) hängt nachdem das Obst (37) in den Empfangsbereich (18) des Ladegeräts (14) gebracht wird.

15. Verfahren zur Obsternte nach einem der Ansprüche 8-13, **dadurch gekennzeichnet, dass** um die Obsthaufen (36) in das Ladegerät (14) abzusetzen, der Ring (55) des Endes des Zugkabels (34) von der Spillhaspel (33) sich in den hinteren Haken (4) der Haupteinlage (1) befindet, in der die Obsthaufen (36) sich befinden, das Zugkabel (34) wird aufgerollt bis diese Haken (4) die hinteren Haken (4) der vorigen aufgerollten Haupteinlage (1) erreichen oder bis zu den Ringen (12) der Hubseile (11) falls es die erste ist, um sie parallel einzuführen, danach wird die Haspel (6) aufgerollt bis das Ende dieser Haupteinlage (1) hängt hängt nachdem das Obst (37) in den Empfangsbereich (18) des Ladegeräts gebracht wird.

16. Verfahren zur Obsternte nach einem der Ansprüche 8-15, **dadurch gekennzeichnet, dass** um in den Container (9) das im Empfangsbereich des Ladegeräts (18) gelagerte Obst zu heben und zu deponieren , der Haken (25) des Ladegeräts (14) in das Ankerkabel des LadegerÄts (48) in der Haupteinlage (1) gehakt wird, die Haspel (14) aufgerollt wird bis der größte Teil des Ladegeräts (14) aufgerollt ist und das Halterungskabel (22) des Ladegeräts (14) befestigt wird und sich praktisch in einer senkrechten Position befindet, in die Richtung der Haspel (6) orientiert nachdem das Obst (37) in den Container (9) gelert wurde.

## Revendications

1. Equipement modulaire pour récolter des fruits, **caractérisé**
- **en ce qu'**il comprend au moins un module qui peut être installé dans une benne (9) d'un véhicule remorqué ou autopropulsé,
- en en ce que chacun des modules comprend :
- une bobine motorisée et télécommandée (6) horizontalement supportée sur
- une structure de support fixée à la benne (9), dotée d'un support à l'envers (8) parallèle à la bobine (6) et situé à un niveau plus bas,
- plusieurs feuilles principales (1), qui peuvent être assemblées les unes aux autres, pour y entasser les fruits (37) tombés des arbres (39), et qui peuvent s'enrouler autour de la bobine (6) et se dérouler de celle-ci.
- plusieurs feuilles complémentaires (2), qui sont placées transversalement par rapport aux feuilles principales (1), pour récolter les fruits (37) et les entasser sur les feuilles principales (1).
- un chargeur (14) pour la réception et le déchargement des fruits (37) dans la benne (9) ; qui peut être enroulé autour ou déroulé de la bobine (6) et qui peut être raccordé aux feuilles principales (1) à une extrémité, et fixé à la structure de support, à un niveau plus bas que la bobine (6), à travers un élément de serrage.

2. Equipement modulaire pour récolter des fruits, selon la revendication 1, **caractérisé en ce que** le chargeur (14) est fabriqué dans une matière textile et **en ce que** lorsqu'il est raccordé à chacune des feuilles principales (1) qui vont être longitudinalement enroulées autour de la bobine (6), l'autre extrémité restant fixée au moyen d'un élément de serrage à la structure de support et sa partie supérieure (28) reposant sur le support à l'envers (8), sa partie centrale est plus basse que ses bordures (27) pendant son mouvement de levage jusqu'à dépasser la hauteur du support à l'envers (8) susmentionné, soit par le fait de sa configuration, soit par un effet gravitationnel.

3. Equipement modulaire pour récolter des fruits, selon l'une quelconque des revendications précédentes, **caractérisé en ce que** le chargeur (14) est fabriqué dans une matière textile rigide à la traction, et en **en ce qu'**il possède une surface de réception des fruits (18), dont la ligne périphérique est convexe au niveau de son raccord (29) à une surface concave du chargeur (19), et **en ce que** la partie supérieure (28) du chargeur (14) possède dans ses coins et dans la partie intermédiaire entre ces derniers et son centre des pièces de renforcement (21) pour prendre les bandes élastiques (16) et dans sa partie centrale une pièce de renforcement centrale (20) pour prendre une corde de fixation (22) du chargeur (14), et **en ce que** les bandes élastiques (16) qui tirent sur les coins de la partie supérieure (28) du chargeur sont tenues par une structure de support sur des points de fixation élevés (17) par rapport au support à l'envers (8) du chargeur, tandis que la corde (22) est attachée à point central de fixation (15) situé au centre de la structure de support au même niveau ou plus bas que ce support à l'envers (8), et **en ce que** les bandes élastiques (16) qui tirent sur la partie intermédiaire entre les coins et la pièce de renforcement centrale (20) sont attachées aux points de fixation (23) de la structure de support, également au même niveau ou plus bas que ce support à l'envers (8), et **en ce que** la bordure externe de la surface de réception (18) du chargeur est dotée à son extrémité d'au moins un mousqueton d'attache (25).

4. Equipement modulaire pour récolter des fruits, selon l'une quelconque des revendications précédentes, **caractérisé en ce que** les feuilles principales (1) sont fabriquées dans une matière textile, rectangulaire et encadrée par une bande périphérique (3) fabriquée dans une matière hautement résistante à la traction, ont à leurs coins cousus à cette bande périphérique (3) des mousquetons d'attaches (4), et **en ce qu'**elles ont à leurs deux extrémités des cordes de fixation (48) dont la longueur est substantiellement la même que la largeur de ces feuilles principales (1) et **en ce qu'**en plus, sur la bande périphérique (3), dans la zone correspondant aux bordures longitudinales, elles possèdent une série d'oeillets (49) séparés les uns des autres.

5. Equipement modulaire pour récolter des fruits, selon l'une quelconque des revendications précédentes, **caractérisé en ce que** la feuille principale (1) qui est attachée à la bobine (6), ou qui en est détachée, l'est ainsi grâce à deux mousquetons d'attache (4) de l'une de ses extrémités, dans des anneaux (12) attachés à des cordes de levage (11) fixées à la bobine (6) aux points de fixation (13), et **en ce que** cette feuille principale (1) est attachée, ou détachée, à au moins une deuxième feuille principale (1) moyennant l'insertion ou le détachement des mousquetons d'attache (4) de la partie frontale de la feuille principale (1) suivante à la partie arrière de la feuille principale (1) précédente, lorsque la bobine (6) enroule le fil formé par les feuilles principales (1) et le déroule pour déposer les feuilles (1) sur le sol, et **en ce qu'**à chaque fois que l'enroulement et le déroulement d'une feuille principale (1) est réalisé, le mousqueton d'attache (25) du chargeur (14) est attaché ou détaché de la corde de fixation (48) du chargeur (14).

6. Equipement modulaire pour récolter des fruits, selon l'une quelconque des revendications précédentes, **caractérisé en ce qu'**il possède plusieurs feuilles complémentaires (2) fabriquées dans une matière grillagée en forme de parallélogramme, qui sont dotées dans leurs coins d'anneaux (5) cousus à ces dernières et dont la longueur est égale à un multiple de la largeur de des allées transversales ou secondaires (52) où les fruits doivent être récoltés.

7. Equipement modulaire pour récolter des fruits, selon l'une quelconque des revendications précédentes, **caractérisé en ce qu'**un treuil cabestan (33) est installé sur la propre structure de support.

8. Procédure de récolte de fruits utilisant un équipement modulaire selon les revendications 1-7, **caractérisée en ce qu'**elle comprend les étapes suivantes :
- Disposition des feuilles principales (1) et secondaires (2) sur le sol.
- Secouement des fruits (37) des arbres (39), qui tombent principalement sur les feuilles complémentaires (2).
- Dépôt des fruits (37) en tas (36) sur les feuilles principales (1).
- Ramassage des tas de fruits (36) dans le chargeur (14) et chargement de ces derniers dans la benne (9) du véhicule et
- Déchargement de la benne (9) et commencement d'un nouveau cycle.

9. Procédure de récolte de fruits selon la revendication 8, **caractérisée en ce que** les feuilles principales (1) sont étendues sur les allées transversales (52) par rapport aux allées principales (51), où le véhicule circule, séparées les unes des autres par une distance qui est substantiellement la même que la longueur des feuilles complémentaires (2).

10. Procédure de récolte de fruits selon l'une quelconque des revendications 8-9, **caractérisée en ce que** les feuilles complémentaires (2) reposent sur les allées principales (51) avec leurs extrémités avant sur les feuilles principales (1) et leurs extrémités arrières dirigées vers la zone des arbres (39) desquels les fruits vont être récoltés, couvrant le sol et encerclant les troncs d'arbre (39) de toutes les allées principales parallèles (51) qui croisent ces feuilles principales (1).

11. Procédure de récolte de fruits selon l'une quelconque des revendications 8-10, **caractérisée en ce qu'**une fois que les fruits (37) sont tombés sur les feuilles complémentaires (2), ces feuilles complémentaires (2) sont retournées vers l'avant enveloppant ainsi les fruits (37) et les transportant pour les déposer en tas (36) sur les feuilles principales (1), et **en ce que** par cette action, les feuilles complémentaires (2) sont quant à elles disposées dans la même position relative par rapport à la ligne des feuilles principales (1) à savoir perpendiculaire, le cycle suivant de cueillette des fruits (37) et d'entassement commençant alors.

12. Procédure de récolte de fruits selon l'une quelconque des revendications 8-10, **caractérisée en ce que** les feuilles complémentaires (2) sont raccordées les unes aux autres attachées par leurs anneaux (5) formant ainsi des cordes, dont la longueur est supérieure ou égale à celle, existant entre les deux couloirs contigus (53) et ces cordes étant placées de telle sorte que le raccord entre les deux feuilles complémentaires (2) coïncident sur la feuille principale correspondante (1) disposée avant, couvrant ainsi tout le sol et encerclant les troncs d'arbre (39) de toutes les allées principales (51) parallèles, qui croisent ces feuilles principales (1) entre les deux couloirs (53) pour le passage du véhicule portant la benne (9).

13. Procédure de récolte de fruits selon la revendication précédente, **caractérisée en ce que** les fruits (37) sont tombés sur des cordes de feuilles complémentaires (2), ces cordes de feuilles complémentaires (2) sont retournées vers l'avant pour déposer les fruits (37) sur les feuilles principales (1), situées à l'endroit du raccordement de deux feuilles complémentaires (2), jusqu'à ce que la partie avant de la première feuille complémentaire (2) de la corde soit disposée dans le couloir suivant (53), et **en ce que** par cette action les cordes de feuilles complémentaires (2) sont disposées dans la même position relative par rapport aux couloirs (53) mais devant, le cycle suivant de secouement et d'entassement des fruits (37) commençant alors.

14. Procédure de récolte de fruits selon l'une quelconque des revendications 8-10, **caractérisée en ce que** pour déposer les tas de fruits (36) dans le chargeur (14) les mousquetons d'attache (4) avant de la feuille principale (1) sur laquelle les tas de fruits (36) sont entassés, sont fixés aux mousquetons d'attache (4) arrière de la feuille principale (1) enroulée, ou aux anneaux (12) des cordes de levage (11) si c'est la premi, et la feuille principale (1) est enroulée autour de la bobine (6) jusqu'à ce que le bout de cette feuille (1) pende après avoir déposé les fruits (37) dans la zone de réception des fruits (18) du chargeur (14).

15. Procédure de récolte de fruits selon l'une quelconque des revendications 8-13, **caractérisée en ce que** pour déposer les tas de fruits (36) dans le chargeur (14), l'anneau (55) de l'extrémité de la corde de traction (34) du treuil cabestan (33) est inséré dans les mousquetons d'attache (4) arrières de la feuille principale (1), sur laquelle se trouvent les tas de fruits (36), la corde de traction (34) est enroulée dans le sens ascendant jusqu'à ce que ces mousquetons d'attache (4) atteignent les mousquetons d'attache arrières (4) de la feuille principale (1) enroulée précédente ou les anneaux (12) des cordes de levage (11) si c'est la première, pour les insérer parallèlement dans ces derniers, puis l'enroulement de la bobine (6) est commandé jusqu'à ce que l'extrémité de cette feuille principale (1) pende après avoir déposé les fruits dans la zone de réception (18) du chargeur.

16. Procédure de récolte de fruits selon l'une quelconque des revendications 8-15, **caractérisée en ce que** pour lever et déposer dans la benne (9) les fruits déposés dans la zone de réception du chargeur (18), le mousqueton d'attache (25) du chargeur (14) est attaché à la corde de fixation du chargeur (48) sur la feuille principale (1), la bobine (6) est enroulée jusqu'à ce que la majeure partie du chargeur (14) soit enroulée sur cette dernière et la corde de fixation du chargeur (14) est resserrée et pratiquement dans une position verticale orientée vers la bobine (6) après avoir vidé les fruits (37) dans la benne (9).
